# EUROPEAN PATENT APPLICATION

(11) **EP 4 700 973 A1**
(43) Date of publication of application: **25.02.2026**
(21) Application number: 25750533.9
(22) Date of filing: 08.02.2025
(51) Int. Cl.: H01M 50/566

(54) **BATTERY TOP COVER, BATTERY AND ELECTRIC DEVICE**

(30) Priority: 05.07.2024 CN 202421591192 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: AN, Suli, Huizhou, Guangdong 516039 (CN); SHU, Kuanjin, Huizhou, Guangdong 516039 (CN); LIU, Ziwen, Huizhou, Guangdong 516039 (CN); DUAN, Dong, Huizhou, Guangdong 516039 (CN); LIN, Zhibing, Huizhou, Guangdong 516039 (CN)
(74) Representative: Berggren Oy
(86) International application number: PCT/CN2025/076413
(87) International publication number: WO 2026/007404

(57) **Abstract**

Provided are a battery cover, a battery, and an electrical equipment. The battery cover includes a cover assembly, a first electrode terminal, and a first electrode pole, the cover assembly is provided with a first through hole, the first electrode terminal is attached to the cover assembly, the first electrode pole penetrates through the first through hole, a first end of the first electrode pole is connected to the first electrode terminal; the cover assembly is provided with a receiving groove, and an orthographic projection of a connection redundant part generated between the first electrode pole and the first electrode terminal on the cover assembly is within the receiving groove.

## Description

The present disclosure claims priority to Chinese Patent Application No. 202421591192.3, filed with the China National Intellectual Property Administration on July 5, 2024, the entire content of which is incorporated herein by reference.

### TECHNICAL FIELD

The present disclosure relates to a field of battery, and in particular, to a battery cover, a battery, and an electrical equipment.

### BACKGROUND

The battery cover is one of the important parts of the battery. The battery cover generally includes the top cover, pole, connection terminal, and the like.

### SUMMARY

For a battery cover in the related art, a pole and a connection terminal of the battery cover are mainly connected by welding, mortise and tenon joints, etc., and the above connection means easily lead to a redundant structure to be generated at the connection between the pole and the connection terminal, thereby affecting the flatness of the battery cover.

In view of above, in a first aspect, the present disclosure provides a battery cover, including:
a cover assembly provided with a first through hole;
a first electrode terminal attached to the cover assembly; and
a first electrode pole penetrating through the first through hole, where a first end of the first electrode pole is connected to the first electrode terminal;
where the cover assembly is provided with a receiving groove, and an orthographic projection of a connection redundant part generated between the first electrode pole and the first electrode terminal on a surface of the cover assembly close to the first electrode terminal is within the receiving groove.

In a second aspect, the present disclosure provides a battery, including the battery cover described above.

In a third aspect, the present disclosure provides an electrical equipment, including the battery described above.

### BENEFICIAL EFFECT

In the battery cover according to an embodiment of the present disclosure, when the first electrode pole and the first electrode terminal are connected together, there is a connection redundant part generated at the connection between the first electrode pole and the first electrode terminal. Since the orthographic projection of the connection redundant part on the surface of the cover assembly close to the first electrode terminal is within the receiving groove, the connection redundant part will be accommodated within the receiving groove. That is, in an embodiment of the present disclosure, the receiving groove is provided to accommodate the connection redundant part, to improve the influence of the connection redundant part on the flatness of the cover assembly, improve the influence of the connection redundant part on the flatness of the cover assembly when the first electrode terminal and the first electrode pole are installed onto the cover assembly, and avoid the unevenness of the cover assembly.

### BRIEF DESCRIPTION OF THE DRAWINGS

FIG. 1 is a schematic exploded block diagram of a battery cover according to some embodiments of the present disclosure;
FIG. 2 is a cross-sectional view of a battery cover according to some embodiments of the present disclosure;
FIG. 3 is a schematic enlarged block diagram of a portion A in FIG. 2 according to some embodiments of the present disclosure;
FIG. 4 is a schematic block diagram of a first battery terminal according to some embodiments of the present disclosure;
FIG. 5 is a schematic block diagram of the connection between the first battery terminal and the first electrode pole according to some embodiments of the present disclosure;
FIG. 6 is a schematic block diagram of a first electrode pole according to some embodiments of the present disclosure;
FIG. 7 is a schematic block diagram of a portion of a battery cover according to some embodiments of the present disclosure.

### DETAILED DESCRIPTION

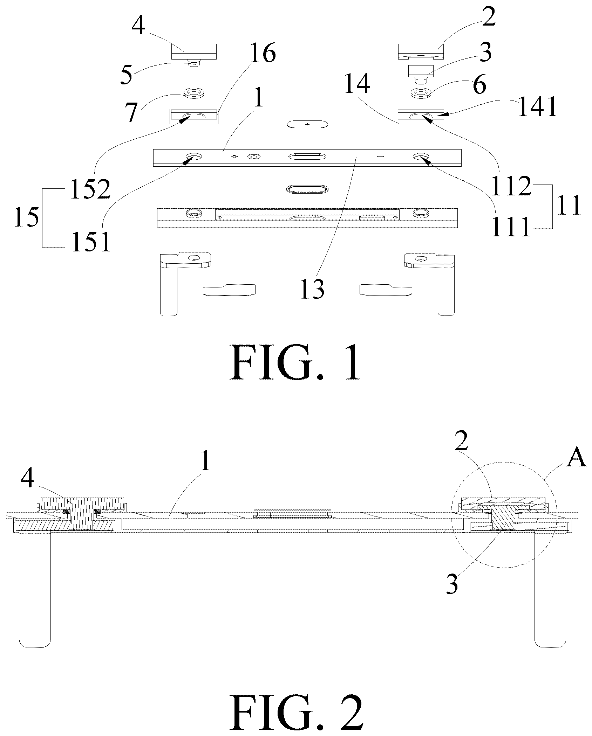

Some embodiments of the present disclosure disclose a battery cover, as shown in FIGS. 1, 2 and 3, the battery cover includes a cover assembly 1, a first electrode terminal 2, and a first electrode pole 3. The cover assembly 1 is provided with a first through hole 11, the first electrode terminal 2 is attached to the cover assembly 1, the first electrode pole 3 penetrates through or is inserted into the first through hole 11, with a first end of the first electrode pole 3 connected to the first electrode terminal 2.

The cover assembly 1 is provided with a receiving groove 12, and an orthographic projection of a connection redundant part generated between the first electrode pole 3 and the first electrode terminal 2 on a surface of the cover assembly 1 close to the first electrode terminal 2 is within the receiving groove 12.

In the battery cover according to an embodiment of the present disclosure, when the first electrode pole 3 and the first electrode terminal 2 are connected/welded together, there is a connection redundant part generated at the connection between the first electrode pole 3 and the first electrode terminal 2. Since the orthographic projection of the connection redundant part on the surface of the cover assembly 1 close to the first electrode terminal 2 is within the receiving groove 12, the connection redundant part will be accommodated within the receiving groove 12. That is, in an embodiment of the present disclosure, the receiving groove 12 is provided to accommodate the connection redundant part, to improve the influence of the connection redundant part on the flatness of the cover assembly 1, improve the influence of the connection redundant part on the flatness of the cover assembly 1 when the first electrode terminal 2 and the first electrode pole 3 are installed onto the cover assembly 1, and avoid the unevenness of the cover assembly 1.

In an embodiment of the present disclosure, the connection redundant part includes a welding material.

It can be understood that when the first electrode pole 3 and the first electrode terminal 2 are welded together, the orthographic projection of the connection redundant part generated between the first electrode pole 3 and the first electrode terminal 2 on the surface of the cover assembly 1 close to the first electrode terminal 2 is within the receiving groove 12. Therefore, the welding material such as solder paste or the like used during welding will drip into the receiving groove 12 when dripping, and the welding material remaining at the connection between the first electrode pole 3 and the first electrode terminal 2 will be in the receiving groove. That is, by using the receiving groove 12 to accommodate the welding material such as solder paste or the like, the influence of the welding material such as solder paste or the like on the flatness of the cover assembly 1 is improved. Due to the welding material such as solder paste or the like accumulated when the first electrode terminal 2 and the first electrode pole 3 are installed on the cover assembly 1, the cover assembly 1 is prevented from having the different height at opposite sides.

In the related art, the welding material such as solder paste or the like will drip and accumulate on a side of the cover assembly 1 facing the first electrode terminal 2, resulting in poor flatness of the side of the cover assembly 1 facing the first electrode terminal 2. Due to the welding material such as solder paste or the like accumulated when the first electrode terminal 2 and the first electrode pole 3 are installed on the cover assembly 1, the cover assembly 1 is prevented from having the different heights at opposite sides, thereby affecting the quality of the battery cover.

It can be understood that the receiving groove 12 is formed at the side of the cover assembly 1 facing the first electrode terminal 2, so that the receiving groove 12 faces the connection redundant part generated between the first electrode pole 3 and the first electrode terminal 2, so that the receiving groove 12 may collect the welding material such as solder paste or the like used when the first electrode pole 3 and the first electrode terminal 2 are welded, to prevent the welding material such as solder paste or the like from dripping onto a bonding surface of the cover assembly 1 at which the first electrode terminal 2 and the first electrode pole 3 are coupled to the cover assembly 1, thereby improving the influence of dripped welding material such as solder paste or the like on the flatness of the cover assembly 1, improving the influence of the welding material such as solder paste or the like on the cover assembly 1 when the first electrode terminal 2 and the first electrode pole 3 are installed on the cover assembly 1, and avoiding the cover assembly 1 from having the different heights at opposite sides.

In some examples, the first electrode terminal 2 is a negative electrode terminal, and the first electrode pole 3 is a negative electrode pole.

The structures of the positive terminal and the positive electrode pole may be the same as the structures of the negative terminal and the negative electrode pole. That is, the positive terminal is attached to the cover assembly 1, the positive electrode pole penetrates through the cover assembly 1, and the positive electrode pole and the positive terminal are connected by welding. The cover assembly 1 is provided with a positive electrode accommodating structure. The orthographic projection of the connection redundant part, at the connection between the positive electrode pole and the positive terminal, on the surface of the cover assembly 1 is within a positive electrode redundant part. The positive electrode accommodating structure is configured to accommodate the welding material such as solder paste or the like dripping when the positive electrode pole and the positive terminal are welded. The positive electrode pole and the positive terminal are connected together by welding. Since the orthographic projection of the connection redundant part, at the connection between the positive electrode pole and the positive terminal, on the surface of the cover assembly 1 is within the positive electrode redundant part, the welding material such as solder paste or the like used during welding will drip into the positive electrode accommodating structure when dripping. That is to say, by using the positive electrode accommodating structure to accommodate the welding material such as solder paste or the like, the influence of the welding material such as solder paste or the like on the flatness of the cover assembly 1 is improved. Due to the welding material such as solder paste or the like accumulated when the positive electrode pole and the positive terminal are installed on the cover assembly 1, the unevenness (that is, different heights at opposite sides) is avoided from occurring at opposite sides of the cover assembly 1.

In an embodiment of the present disclosure, the connection redundant part includes a rivet protrusion.

It can be understood that the first electrode pole 3 and the first electrode terminal 2 are connected by riveting. Since the orthographic projection of the connection redundant part generated between the first electrode pole 3 and the first electrode terminal 2 on the surface of the cover assembly 1 close to the first electrode terminal 2 is within the receiving groove 12, the riveted protrusion between the first electrode pole 3 and the first electrode terminal 2 will be located in the receiving groove 12. That is, by using the receiving groove 12 to accommodate the riveted protrusion, the influence of the riveted protrusions on the flatness of the cover assembly 1 is improved, and the cover assembly 1 is prevented from having the different heights at opposite sides, thereby affecting the quality of the battery cover.

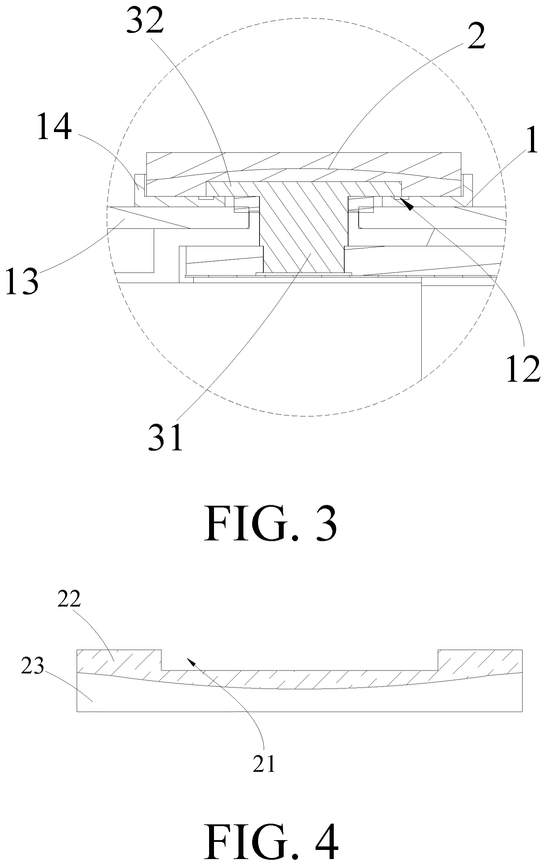

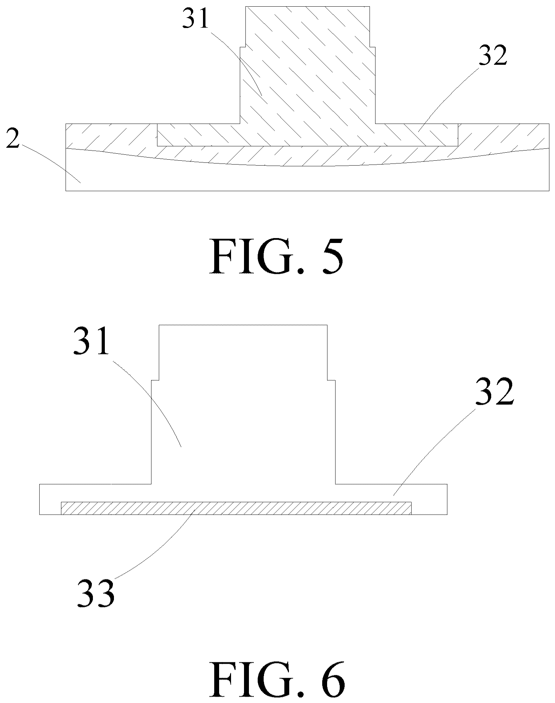

In an embodiment of the present disclosure, as shown in FIG. 3 and FIG. 5, the first electrode pole 3 includes a connection block 31 and a main body 32 integrally formed, the connection block 31 is connected to an end of the main body 32, and the other end of the main body 32 penetrates through the first through hole 11. The connection block 31 extends radially outward from the main body 32 in the horizontal direction, the diameter of the connection block 31 is greater than the diameter of the first through hole 11, and the connection block 31 is connected to the first electrode terminal 2, so that the connection block 31 is attached to the cover assembly 1. This avoids alignment of the connection redundant part with the hole wall of the first through hole 11, and facilitates the forming of the receiving groove 12.

In an embodiment of the present disclosure, as shown in FIGS. 3, 4, and 5, a first snap-in groove 21 is provided at a side of the first electrode terminal 2 facing the first electrode pole 3, the first end of the first electrode pole 3 is snap-fitted into the first snap-in groove 21, and the side wall of the first snap-in groove 21 is connected to the first electrode pole 3.

It can be understood that the first electrode pole 3 is snap-fitted into the first snap-fit groove 21 of the first electrode terminal 2, and the first snap-fit groove 21 may limit the first electrode pole 3, thereby improving the connection stability between the electrode pole and the first electrode terminal 2. The first snap-fit groove 21 is used to limit the first electrode pole 3, so that the first electrode terminal 2 does not move relative to the first electrode pole 3. In this case, the first electrode terminal 2 and the first electrode pole 3 are connected together by welding, which ensures the accuracy and quality of welding. In an example, the first electrode terminal 2 and the first electrode pole 3 may be connected by riveting, which is convenient for the connection between the first electrode terminal 2 and the first electrode pole 3.

In some examples, the side wall of the first snap-fit groove 21 and the first electrode pole 3 are fixedly connected together by welding to achieve a fixed connection between the first electrode terminal 2 and the first electrode pole 3. Moreover, welding is performed after the first electrode pole 3 is snap-fitted into the first snap-fit groove 21, which may increase the area of the welding region between the first electrode pole 3 and the first electrode terminal 2, and improve the connection stability between the first electrode pole 3 and the first electrode terminal 2.

In some examples, the inner wall of the first snap-fit groove 21 abuts against the first electrode pole 3, and the shape of the first electrode pole 3 matches the shape of the inner wall of the first snap-fit groove 21. The inner wall of the first snap-fit groove 21 may have a regular or irregular shape.

In an embodiment of the present disclosure, the side wall surface of the first electrode pole 3 is connected to the side wall surface of the first snap-fit groove 21 by welding, and the orthographic projection of the side wall surface of the first electrode pole 3 on the cover assembly 1 is within the receiving groove 12, and the orthographic projection of the side wall surface of the first snap-fit groove 21 on the cover assembly 1 is also within the receiving groove 12. It is ensured that the orthographic projection of the connection redundant part generated between the electrode pole and the first electrode terminal 2 on the cover assembly 1 will be within the receiving groove 12, and it is ensured that the welding material such as solder paste or the like used when welding the first electrode pole 3 and the first electrode terminal 2 will drip into the annular receiving groove, thereby improving the influence of dripped welding material such as solder paste or the like on the flatness of the cover assembly 1, improving the influence of the welding material such as solder paste or the like on the cover assembly 1 when the first electrode terminal 2 and the first electrode pole 3 are installed on the cover assembly 1, and avoiding the cover assembly 1 from having the different heights at opposite sides.

In an embodiment of the present disclosure, the first electrode pole 3 has, for example, a cylindrical shape, the first snap-fit groove 21 is a circular groove matching the first electrode pole 3, and the receiving groove 12 is an annular groove. The outer wall surface of the first electrode pole 3 and the inner wall surface of the first snap-fit groove 21 are connected together by welding, the orthographic projection of the outer wall surface of the first electrode pole 3 on the cover assembly 1 is within the annular groove, and the orthographic projection of the inner wall surface of the first snap-fit groove 21 on the cover assembly 1 is also within the annular groove, and the orthographic projection of the connection redundant part generated between the first electrode pole 3 and the first electrode terminal 2 on the cover assembly 1 is also within the annular groove, thereby ensures that the welding material such as solder paste or the like will drip into the annular groove when welding the first electrode pole 3 and the first electrode terminal 2, improving the influence of the dripped welding material such as solder paste or the like on the flatness of the cover assembly 1, improving the influence of the welding material such as solder paste or the like on the cover assembly 1 when the first electrode terminal 2 and the first electrode pole 3 are installed on the cover assembly 1, and avoiding the cover assembly 1 from having the different heights at opposite sides.

In an embodiment of the present disclosure, as shown in FIG. 6, a second snap-fit groove 33 is formed at a side of the first electrode pole 3 facing the first electrode terminal 2, and the first electrode terminal 2 is snap-fitted into the second snap-fit groove 33.

It can be understood that the first electrode terminal 2 is snap-fitted in the second snap-fit groove 33 of the first electrode pole 3, and the second snap-fit groove 33 may limit the first electrode terminal 2 so that the first electrode terminal 2 cannot move relative to the first electrode pole 3, to facilitate the first electrode terminal 2 and the first electrode pole 3 to be connected together by welding, thereby ensuring the accuracy and quality of welding.

In an embodiment of the present disclosure, in a horizontal direction, the distance between the inner edge of the orthographic projection of the connection redundant part on the surface of the cover assembly 1 close to the first electrode terminal 2 and the inner edge of the receiving groove 12 is greater than zero, and the distance between the outer edge of the orthographic projection of the connection redundant part on the surface of the cover assembly 1 close to the first electrode terminal 2 and the outer edge of the receiving groove 12 is greater than zero. Therefore, the orthographic projection of the connection redundant part on the cover assembly 1 and the side wall surface of the receiving groove 12 are arranged spaced apart from each other, which ensures that the connection redundant part will be located within the receiving groove 12, and may effectively prevent the connection redundant part from being located outside the receiving groove 12.

In some examples, when the first electrode terminal 2 and the first electrode pole 3 are welded and connected, it can be ensured that the welding material such as solder paste or the like used during the welding process of the first electrode terminal 2 and the first electrode pole 3 will completely drip into the receiving groove 12, and the welding material such as solder paste or the like may be effectively prevented from overflowing into the area outside the receiving groove 12, thereby improving the influence of the dripped welding material such as solder paste or the like on the flatness of the cover assembly 1, improving the influence of the welding material such as solder paste or the like on the cover assembly 1 when the first electrode terminal 2 and the first electrode pole 3 are installed on the cover assembly 1, avoiding the cover assembly 1 from having the different heights at opposite sides, and ensuring the quality of the battery.

In some embodiments, the central axis of the connection redundant part is aligned with the central axis of the receiving groove 12. The distances respectively between the respective edges of the projection of the connection redundant part on the cover assembly 1 and the side wall surfaces of the receiving groove 12 corresponding to the respective edges are same as each other. The dripped welding material such as solder paste or the like used when the first electrode terminal 2 and the first electrode pole 3 are welded will drip mainly at the center of the receiving groove 12, ensuring that the welding material such as solder paste or the like will drip into the receiving groove 12, improving the influence of the dripped welding material such as solder paste or the like on the flatness of the cover assembly 1, improving the influence of the welding material such as solder paste or the like on the cover assembly 1 when the first electrode terminal 2 and the first electrode pole 3 are installed on the cover assembly 1, and avoiding the cover assembly 1 from having the different heights at opposite sides.

In an embodiment of the present disclosure, as shown in FIGS. 1, 2, and 3, the cover assembly 1 includes a cover sheet 13 and a first insulation member 14, the first insulation member 14 insulates and isolates the first electrode terminal 2 from the cover sheet 13, and the first insulation member 14 is formed with the receiving groove 12.

It can be understood that the first electrode terminal 2 and the cover sheet 13 are connected by the first insulation member 14, and the receiving groove 12 is formed at the first insulation member 14 to accommodate the welding materials such as solder paste or the like, to avoid the structural impacts on the cover sheet 13, thereby ensuring the structural stability of the cover sheet 13.

In some examples, as shown in FIG. 1, the first through hole 11 includes a third through hole 111 and a fourth through hole 112. The third through hole 111 and the fourth through hole 112 are coaxially arranged. The cover sheet 13 is formed with the third through hole 111. The first insulation member 14 is formed with the fourth through hole 112. The first electrode pole 3 penetrates through the fourth through hole 112 and the third through hole 111.

Exemplarily, the first insulation member 14 is a plastic member, for example. Due to the relatively soft material of the plastic member, it is easier to form the receiving groove 12 on the plastic member than to form the receiving groove 12 on a rigid member.

In an embodiment of the present disclosure, as shown in FIG. 1, the first insulation member 14 is formed with a third snap-fit groove 141, the first electrode terminal 2 is snap-fitted in the third snap-fit groove 141, and the receiving groove 12 is formed at the bottom of the third snap-fit groove 141.

It can be understood that the third snap-fit groove 141 may limit the first electrode terminal 2 so that the first electrode terminal 2 is stably attached to the cover assembly 1 and the first electrode terminal 2 may be prevented from being offset.

In an embodiment of the present disclosure, as shown in FIGS. 1, 2, and 3, the first electrode terminal 2 includes a first connection portion 22 and a second connection portion 23 connected to each other, the first connection portion 22 is connected to the first electrode pole 3, and the second connection portion 23 is disposed on the side of the first connection portion 22 away from the first electrode pole 3. The first connection portion 22 has a same material as the first electrode pole 3, and the second connection portion 23 has a different material from the first connection portion 22.

In the present embodiment, the first electrode pole 3 has a single material, and thus does not require a multi-metal composite joining process when manufacturing the first electrode pole, thereby improving the structural stability of the first electrode pole. Meanwhile, since the first connection portion 22 and the first electrode pole 3 are made of the same material, the safety risks caused by welding different materials may be avoided.

Exemplarily, the material of the first connection part 22 and the first electrode pole 3 is, for example, copper, and the material of the second connection part 23 is, for example, aluminum.

In an embodiment of the present disclosure, the second end of the first electrode pole 3 passes through the first through hole 11, the bonding surface between the first connection part 22 and the second connection part 23 and the second end of the first electrode pole 3 are respectively located at opposite sides of the cover assembly 1 in a vertical direction, and the second end of the first electrode pole 3 is configured to be connected to the core package. This ensures that the bonding surface of the first connection part 22 and the second connection part 23, that is, the copper-aluminum bonding surface, and the core package are located at the opposite sides of the cover assembly 1, which may prevent the copper-aluminum bonding surface from being immersed in the electrolyte of the core package, and may prevent the electrolyte of the core package from affecting the copper-aluminum bonding surface, thereby ensuring the stability of the copper-aluminum bonding surface.

In an embodiment of the present disclosure, the bonding surface between the first connection portion 22 and the second connection portion 23 is an arc-shaped surface, which increases the area of the bonding surface between the first connection portion 22 and the second connection portion 23 and improves the connection stability between the first connection portion 22 and the second connection portion 23. Exemplarily, the first connection portion 22 and the second connection portion 23 may be formed by cold heading of two separate metal plates, or by cold heading of an integral composite plate.

Illustratively, the first connection portion 22 protrudes toward the second connection portion 23.

In an embodiment of the present disclosure, a side of the second connection portion 23 away from the first connection portion 22 is a flat surface, which facilitates the subsequent connection between the first electrode terminal 2 and other components.

In an embodiment of the present disclosure, a first snap-fit groove 21 is provided on a side of the first electrode terminal 2 facing the first electrode pole 3, and the first end of the first electrode pole 3 is snap-fitted into the first snap-fit groove 21, and the first snap-fit groove 21 concaves in the same direction as a direction in which the arc-shaped surface concaves.

It is understandable that, since the concave direction of the first snap-fit groove 21 is the same as the concave direction of the arc surface, the first snap-fit groove 21 may be formed while the first connection portion 22 and the second connection portion 23 are cold-headed, thereby improving processing efficiency.

In an embodiment of the present disclosure, the thickness of the first connection portion 22 is greater than or equal to 0.5 mm.

Exemplarily, the thickness of the first connection portion 22 is, for example, 0.5 mm, 0.6 mm, or 0.8 mm. It should be noted that the above is only an example of the thickness of the first connection portion 22, and does not specifically limit the thickness of the first connection portion 22. The first connection portion 22 may have any other suitable thickness.

In an embodiment of the present disclosure, the thickness of the second connection portion 23 is greater than or equal to 0.1 mm.

Exemplarily, the thickness of the second connection portion 23 is, for example, 0.1 mm or 0.3 mm. It should be noted that the above is only an example of the thickness of the second connection portion 23, and does not specifically limit the thickness of the second connection portion 23. The thickness of the second connection portion 23 may be in any other suitable thickness range.

In an embodiment of the present disclosure, as shown in FIGS. 1, 2 and 3, the cover assembly 1 is further formed with a second through hole 15, the battery cover includes a second electrode terminal 4 and a second electrode pole 5 integrally formed, the second electrode terminal 4 is connected to the cover assembly 1, and the second electrode pole 5 penetrates through the second through hole 15.

It can be understood that the second electrode terminal 4 and the second electrode pole 5 are integrally formed, which may improve the connection stability between the second electrode terminal 4 and the second electrode pole 5 and simplify the production steps, thereby increasing the production efficiency.

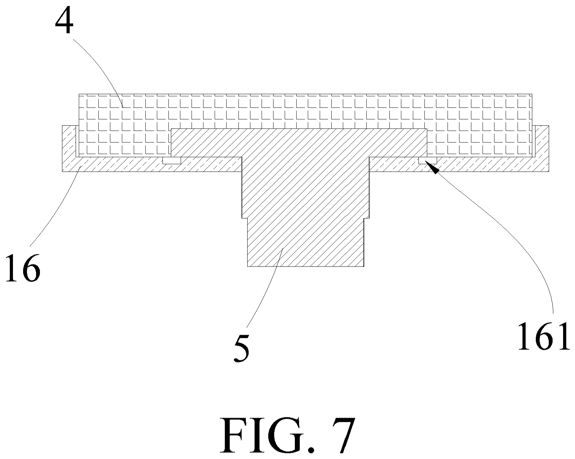

In an embodiment of the present disclosure, the second electrode terminal 4 and the second electrode pole 5 may be not integrally formed, and may be welded together. As shown in FIGS. 1 and 7, the cover assembly 1 includes a cover sheet 13 and a second insulation member 16, the second insulation member 16 is disposed between the second electrode terminal 4 and the cover sheet 13, and the second insulation member 16 is formed with a receiving structure 161.

It can be understood that the second electrode terminal 4 and the cover sheet 13 are connected through the second insulation member 16, and a receiving structure 161 is formed at the second insulation member 16 to accommodate the welding material such as solder paste or the like. By using the receiving structure 161 to accommodate the welding material such as solder paste or the like, the influence of the dripped welding material such as solder paste or the like on the flatness of the cover assembly 1 is improved. Due to the welding material such as solder paste or the like accumulated when the first electrode terminal 2 and the first electrode pole 3 are installed on the cover assembly 1, the cover assembly 1 is avoided from having the uneven heights at opposite sides, thereby affecting the quality of the battery cover, thereby ensuring the quality of the battery. Meanwhile, it may also avoid affecting the structure of the cover sheet 13, and ensure the structural stability of the cover sheet 13.

In some examples, as shown in FIG. 1, the second through hole 15 includes a fifth through hole 151 and a sixth through hole 152, the fifth through hole 151 and the sixth through hole 152 are coaxially arranged, the cover sheet 13 is formed with the fifth through hole 151, the second insulation member 16 is formed with the sixth through hole 152, and the second electrode pole 5 penetrates through the sixth through hole 152 and the fifth through hole 151.

Exemplarily, the second insulation member 16 is a plastic member, for example, which may prevent electrical connection between the second electrode terminal 4 and the cover sheet 13. Also, Due to the relatively soft material of the plastic member, it is easier to form the receiving structure 161 on the plastic member than to form the receiving structure 161 on a rigid member.

Some Embodiments of the present disclosure also provide a battery, including the battery cover according to any of the above embodiments. The structure of the battery is not limited to the presented embodiments. Exemplarily, the battery also includes a shell, a core pack disposed inside the shell, and the battery cover disposed on the shell.

In the battery according to an embodiment of the present disclosure, in the manufacturing of the battery, when the first electrode pole 3 and the first electrode terminal 2 are connected together, there is a connection redundant part generated at the connection between the first electrode pole 3 and the first electrode terminal 2. Since the orthographic projection of the connection redundant part on the surface of the cover assembly 1 close to the first electrode terminal 2 is located within the receiving groove 12, the connection redundant part will be accommodated within the receiving groove 12. That is, in an embodiment of the present disclosure, the receiving groove 12 is provided to accommodate the connection redundant part, to improve the influence of the connection redundant part on the flatness of the cover assembly 1, and improve the influence of the connection redundant part on the flatness of the cover assembly 1 when the first electrode terminal 2 and the first electrode pole 3 are installed onto the cover assembly 1, thereby avoiding the unevenness of the cover assembly 1 and ensuring the quality of the battery..

In an embodiment of the present disclosure, as shown in FIGS. 1, 2 and 3, the battery cover includes a first sealing ring 6, which is sleeved onto the first electrode pole 3 and abuts against the hole wall of the first through hole 11.

It is understandable that the first electrode pole 3 forms a sealed connection with the wall of the first through hole 11 through the first sealing ring 6, thereby preventing the electrolyte in the core package from overflowing through the connection between the first electrode pole 3 and the wall of the first through hole 11, thereby improving the safety performance of the battery.

In an embodiment of the present disclosure, as shown in FIGS. 1, 2 and 3, the battery cover includes a second sealing ring 7, which is sleeved on the second electrode pole 5 and abuts against the hole wall of the second through hole 15.

It can be understood that the second electrode pole 5 forms a sealed connection with the wall of the second through hole 15 through the second sealing ring 7, thereby preventing the electrolyte in the core package from overflowing through the connection between the second electrode pole 5 and the wall of the second through hole 15, thereby improving the safety performance of the battery.

Some embodiments of the present disclosure further disclose an electrical equipment, including the battery according to any of the above embodiments. The battery includes the battery cover according to any of the above embodiments.

In the electric device according to an embodiment of the present disclosure, when the first electrode pole 3 and the first electrode terminal 2 of the battery cover are connected, the orthographic projection of the connection redundant part generated between the first electrode pole 3 and the first electrode terminal 2 on the surface of the cover assembly 1 close to the first electrode terminal 2 is within the receiving groove 12, and the connection redundant part will be located within the receiving groove 12. That is, by using the receiving groove 12 to accommodate the welding material such as solder paste or the like, the influence of the welding material such as solder paste or the like on the flatness of the cover assembly 1 is improved. Due to the welding material such as solder paste or the like accumulated when the first electrode terminal 2 and the first electrode pole 3 are installed on the cover assembly 1, and the unevenness is avoided from occurring at opposite sides of the cover assembly 1, thereby ensuring the quality of the electric device including the battery with the battery cover.

It should be noted that the electrical equipment may be a vehicle, an aircraft, or a household appliance. It should be noted that the above embodiments are only some of embodiments of an electrical equipment and are not intended to limit the electrical equipment.

## Claims

1. A battery cover, **characterized in that** the battery cover comprises:
a cover assembly provided with a first through hole;
a first electrode terminal attached to the cover assembly; and
a first electrode pole penetrating through the first through hole, wherein a first end of the first electrode pole is connected to the first electrode terminal;
wherein the cover assembly is provided with a receiving groove, and an orthographic projection of a connection redundant part generated between the first electrode pole and the first electrode terminal on a surface of the cover assembly close to the first electrode terminal is within the receiving groove.

2. The battery cover of claim 1, wherein a first snap-fit groove is provided at a side of the first electrode terminal facing the first electrode pole, the first end of the first electrode pole is snap-fitted into the first snap-in groove, and a side wall of the first snap-in groove is connected to the first electrode pole.

3. The battery cover of claim 1, wherein a distance between an inner edge of the orthographic projection of the connection redundant part on the surface of the cover assembly close to the first electrode terminal and an inner edge of the receiving groove is greater than zero, and a distance between an outer edge of the orthographic projection of the connection redundant part on the surface of the cover assembly close to the first electrode terminal and an outer edge of the receiving groove is greater than zero.

4. The battery cover of claim 1, wherein a central axis of the connection redundant part is aligned with a central axis of the receiving groove.

5. The battery cover of any of claims 1 to 4, wherein the cover assembly comprises a cover sheet and a first insulation member, the first insulation member is disposed between the first electrode terminal and the cover sheet, and the first insulation member is formed with the receiving groove.

6. The battery cover of any of claims 1 to 4, wherein the first electrode terminal comprises a first connection portion and a second connection portion connected to each other, the first connection portion is connected to the first electrode pole, the second connection portion is disposed on a side of the first connection portion away from the first electrode pole, and
the first connection portion has a same material as the first electrode pole, and the second connection portion has a different material from the first connection portion.

7. The battery cover of claim 6, wherein a bonding surface between the first connection portion and the second connection portion is an arc-shaped surface.

8. The battery cover of claim 7, wherein a first snap-fit groove is provided on a side of the first electrode terminal facing the first electrode pole, the first end of the first electrode pole is snap-fitted into the first snap-fit groove, and the first snap-fit groove concaves in a same direction as a direction in which the arc-shaped surface concaves.

9. The battery cover of claim 6, wherein a thickness of the first connection portion is greater than or equal to 0.5 mm; and/or a thickness of the second connection portion is greater than or equal to 0.1 mm.

10. The battery cover of any one of claims 1 to 4, wherein the first electrode pole comprises a connection block and a main body integrally formed, the connection block is connected to an end of the main body, and another end of the main body penetrates through the first through hole, wherein the connection block extends radially outward from the main body, a diameter of the connection block is larger than a diameter of the first through hole, and the connection block is connected to the first electrode terminal.

11. The battery cover of any one of claims 1 to 4, wherein the cover assembly is formed with a second through hole, the battery cover comprises a second electrode terminal and a second electrode pole integrally formed, the second electrode terminal is connected to the cover assembly, and the second electrode pole penetrates through the second through hole.

12. The battery cover of any one of claims 1 to 4, wherein the connection redundant part comprises a welding material or a rivet protrusion.

13. A battery, **characterized in that** the battery comprises the battery cover of any one of claims 1 to 12.

14. An electrical equipment, **characterized in that** the electrical equipment comprises the battery of claim 13.
